Europäisches Patentamt

European Patent Office

Office européen des brevets

(11) Publication number: **0 101 328**
**B1**

(12) **EUROPEAN PATENT SPECIFICATION**

(45) Date of publication of patent specification: 28.05.86

(21) Application number: **83304794.7**

(22) Date of filing: **18.08.83**

(51) Int. Cl.⁴: **G 11 B 15/00**

(54) **Mount for magnetic tape reels.**

(30) Priority: **18.08.82 JP 142848/82**

(43) Date of publication of application:
**22.02.84 Bulletin 84/08**

(45) Publication of the grant of the patent:
**28.05.86 Bulletin 86/22**

(84) Designated Contracting States:
**DE FR GB**

(56) References cited:
**CH-A- 583 136
DE-A-1 474 343
DE-A-2 344 230
DE-A-2 516 987
DE-A-2 824 330
DE-B-2 243 073
US-A-3 532 286**

(73) Proprietor: **NEC CORPORATION
33-1, Shiba 5-chome, Minato-ku
Tokyo 108 (JP)**

(72) Inventor: **Noguchi, Kunio
C/o NEC Corporation 33-1 Shiba 5-Chome
Minato-ku Tokyo (JP)**

(74) Representative: **Orchard, Oliver John
JOHN ORCHARD & CO. Staple Inn Buildings
North High Holborn
London WC1V 7PZ (GB)**

Courier Press, Leamington Spa, England.

## Description

### BACKGROUND OF THE INVENTION:

This invention relates to the construction of a magnetic tape device used as a memory device for computers, and more particularly to the construction of a mount for magnetic tape reels wound a magnetic tape therearound, and for transmitting the rotary force to the magnetic tape reel.

In a mount for magnetic tape reels of this kind, a tape reel is set thereon and rotated around the axis of a drum type body of the mount by a tape reel-driving motor. It is required that this mount reliably transmits the rotary force from the driving motor to a tape reel set on the mount, i.e. a tape reel is certainly fixed on the mount in a reliable manner without causing a slip occuring between the mount and the tape reel. In order to meet the above requirements, a member for pressuring the tape reel from the axis of the mount toward the outside thereof is provided in the interior of the mount. Therefore, the tape reel set on the mount can be fixedly held by this member. This pressure member is so provided that the pressure member can be project to and retracted in the mount housing. In order to operate the pressure member, a lever is further provided on its outer portion of the mount. When the pressure member is retracted in the mount housing by operating the lever, an operator can set or remove a tape reel on or from the mount. In order to fix the tape reel to the mount, the lever is operated to project the pressure member out of the circumferential surface of the mount.

In a conventional tape reel fixing mechanism of this kind, a member for pressing an inner circumferential surface of a tape reel is provided in two such portions of a mount that substantially correspond to diametrically opposite portions of the inner circumferential surface of the tape reel. Accordingly, the rotational axis of the tape reel tends to be inclined with respect to the rotational axis of a mount around the mentioned diametrical line. Consequently, an edge portion of a tape comes into contact with a tape reel flange and damaged when it draws out from the tape reel. Furthermore, when a magnetic tape device has been set under uncomfortable conditions, a member for pressing the tape reel sticks to an inner circumferential surface of the tape reel in some cases. In such a case, the pressure member cannot be returned to its release position by the force of a pressure-releasing plate spring alone. This prevents the tape reel from being removed from the mount

### SUMMARY OF THE INVENTION:

It is an object of the present invention to provide a magnetic tape fixing mechanism which enables a magnetic tape reel to be fixedly set on and to removed from a mount reliably and smoothly by an operation of a lever. It is an object an embodiment of the present invention to provide a magnetic tape fixing mechanism which enables the rotational axis of a settled tape reel not to be inclined with respect to that of a mount, while the magnetic tape runs.

### BRIEF DESCRIPTION OF THE DRAWINGS:

Prior art and preferred embodiments of the present invention are now described with reference to the accompanying drawings, wherein:

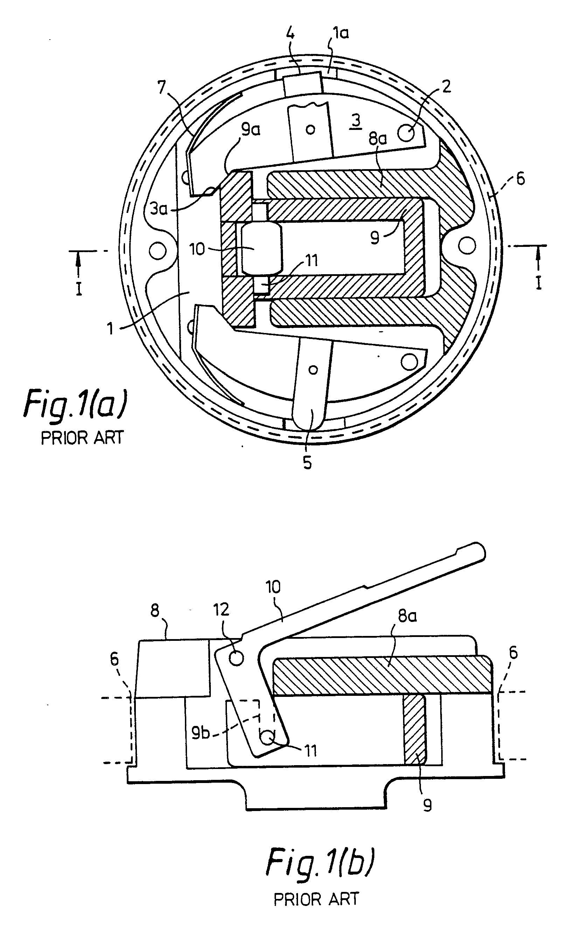

Figs. 1(a) and 1(b) illustrate the construction of an example of a conventional reel fixing mechanism in a tape reel setting or removing mode, wherein:

Fig. 1(a) is a plan view in section, and

Fig. 1(b) is a sectional view taken along the line I—I shown in Fig. 1(a);

Figs. 2(a) and 2(b) illustrate the construction of the conventional reel fixing mechanism shown in Figs. 1(a) and 1(b), in a tape reel fixing mode, wherein:

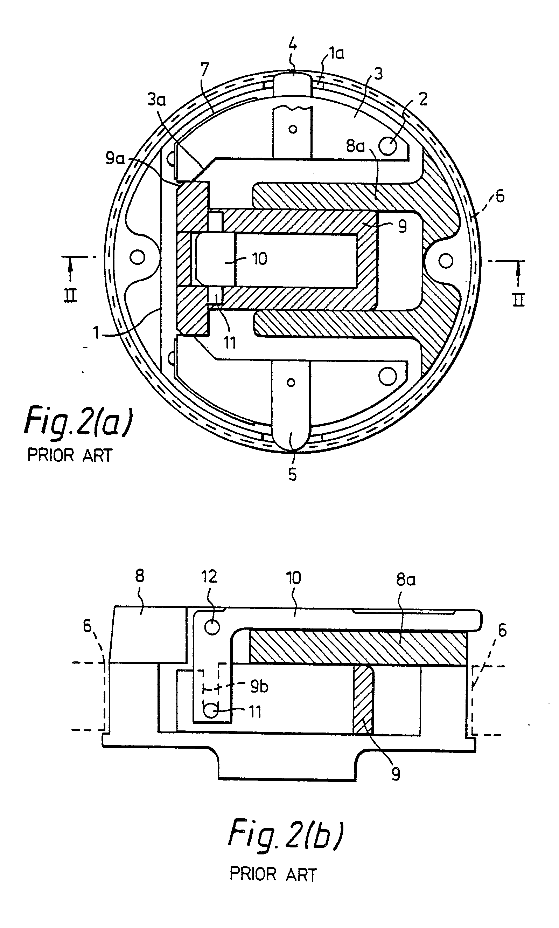

Fig. 2(a) is a plan view in section, and

Fig. 2(b) is a sectional view taken along the line II—II shown in Fig. 2(a);

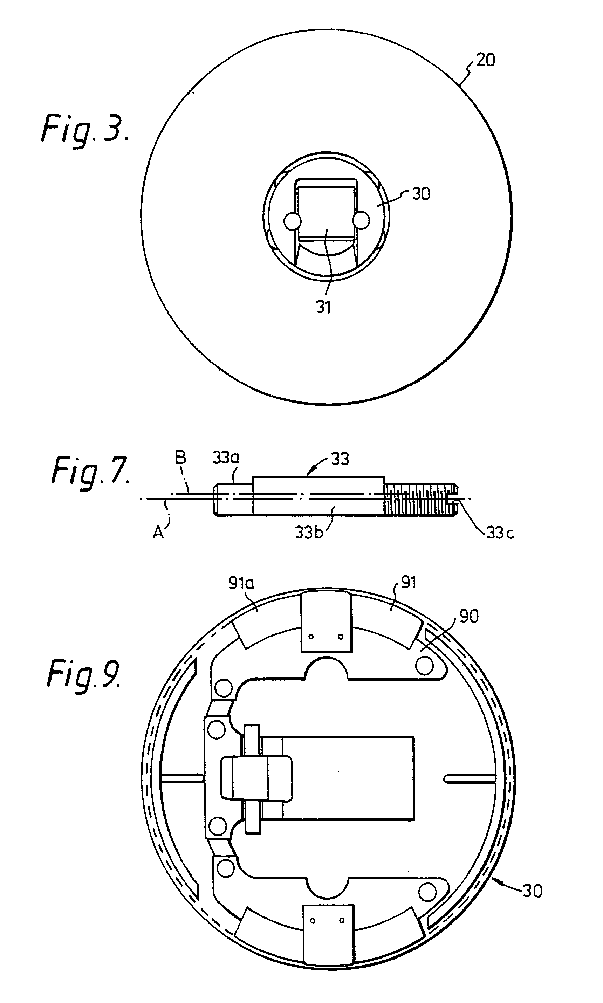

Fig. 3 is a plan view of a mount for tape reels according to a first embodiment of the present invention;

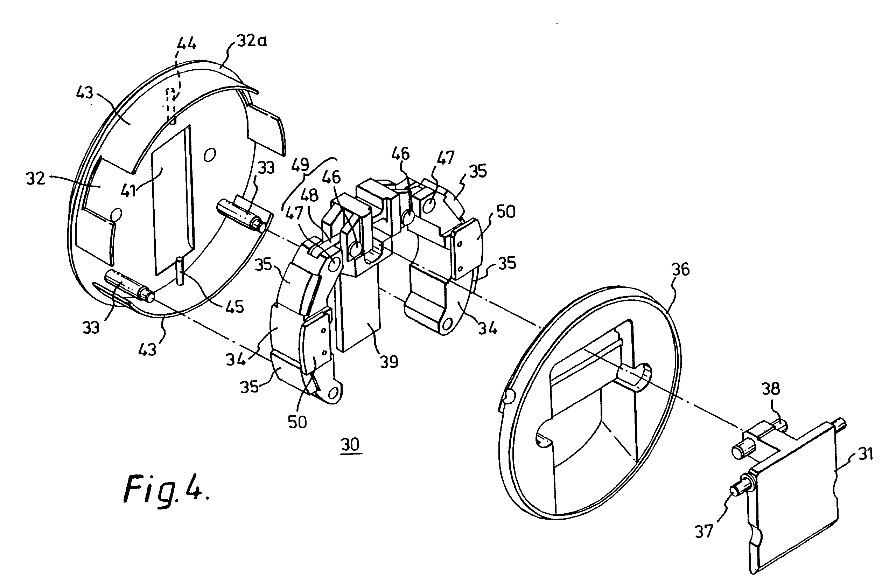

Fig. 4 is an exploded perspective view of a tape reel fixing mechanism used in the first preferred embodiment shown in Fig. 3;

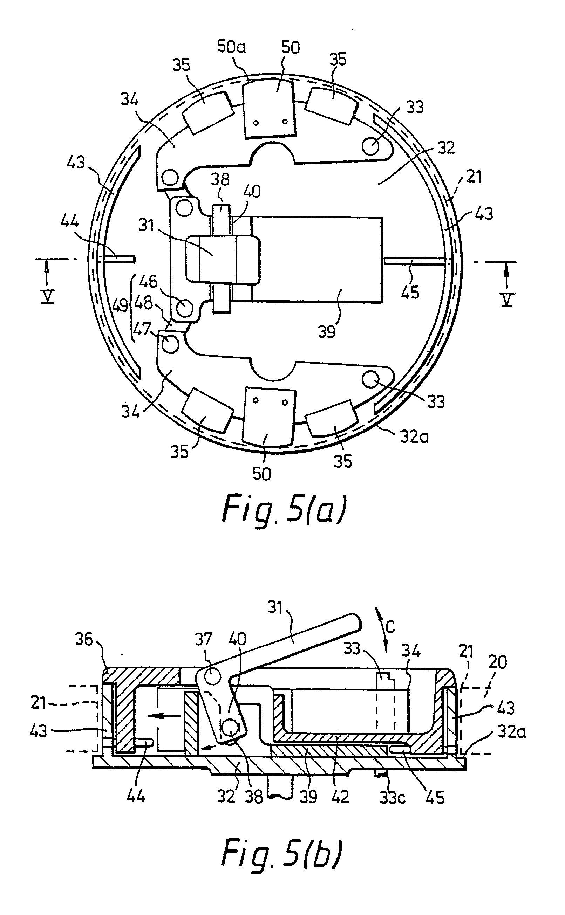

Figs. 5(a) and 5(b) are exploded views of the construction of the tape reel fixing mechanism shown in Fig. 4, which are in a tape reel setting or removing mode, wherein:

Fig. 5(a) is a plan view in section, and

Fig. 5(b) is a sectional view taken along the line IV—IV shown in Fig. 5(a);

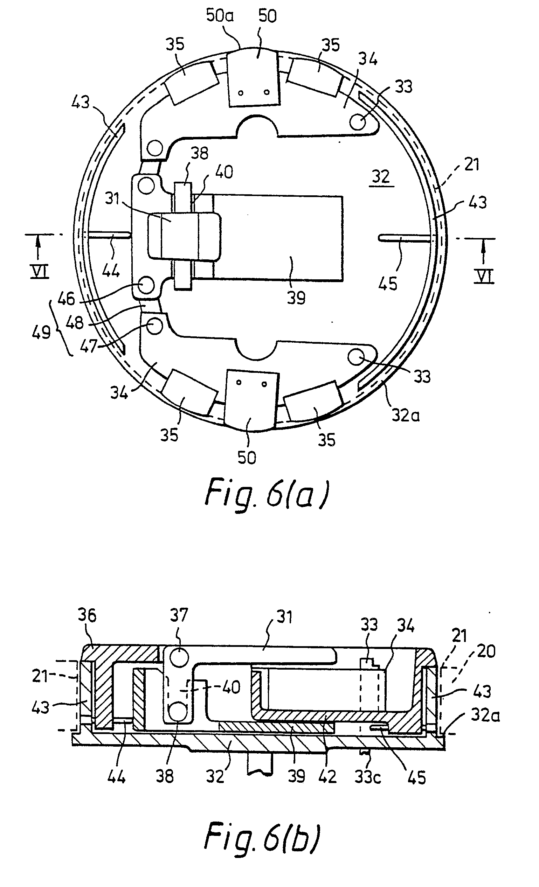

Figs. 6(a) and 6(b) are exploded views of the construction of the tape reel fixing mechanism shown in Fig. 4, which are in a tape reel fixing mode, wherein:

Fig. 6(a) is a plan view in section, and

Fig. 6(b) is a sectional view taken along the line V—V shown in Fig. 6(a);

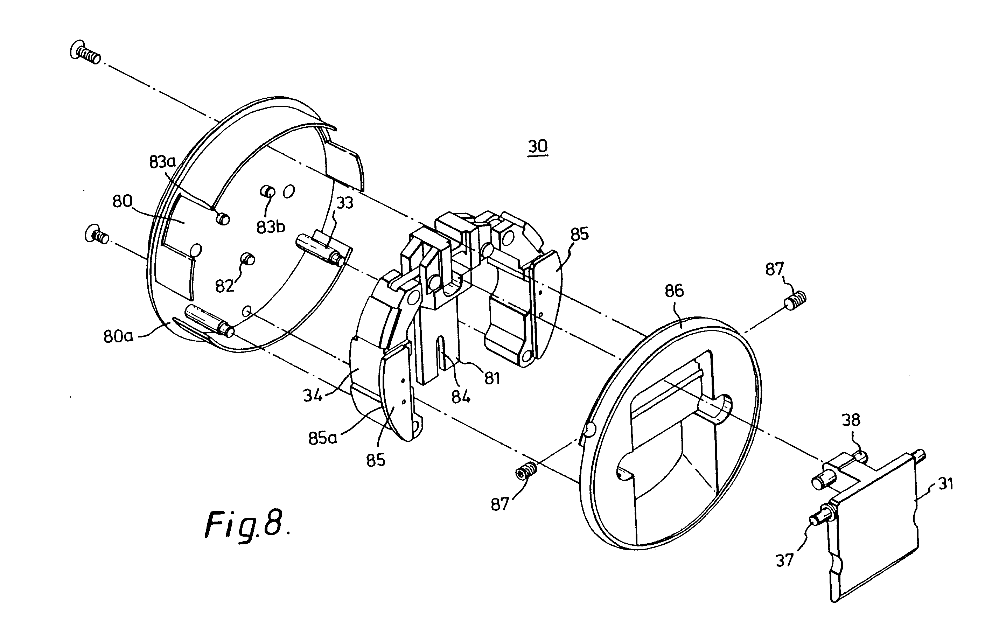

Fig. 7 is a plan view of an eccentric pin used in the tape reel fixing mechanism shown in Fig. 4;

Fig. 8 is an exploded perspective view of a tape reel fixing mechanism used in a second embodiment of the present invention; and

Fig. 9 is a plan view of a tape reel fixing mechanism used in a third embodiment of the present invention.

### DESCRIPTION OF THE PREFERRED EMBODIMENTS:

Before describing the embodiments of the present invention, a conventional tape reel fixing mechanism of the prior art will be described with reference to the drawings.

In a reel fixing mechanism for a conventional mount for tape reels, which was used in a magnetic tape device N7611 manufactured by NEC Corporation, a pair of collets 3 are pivotably mounted on pivots 2, which are planted in a lower housing member 1 of a mount for reels, as shown in Figs. 1(a), 1(b), 2(a) and 2(b). The lower housing member 1 is provided with openings 1a on its circumferential side wall. Rubber members 4 are fixed on the respective outer circumferential surfaces of the collets 3, and enable to project outward from the openings 1a when the collets 3 are pivotally moved in the outward direction in the lower housing member 1. Plates 5 are further provided on the respective upper surfaces of the collets 3. The free end portions of the plates 5 are positioned on the inside of a broken line 6 when the collets 3 are pivotally moved toward the axis of the mount, and project to the outside of the line 6 when the collets 3 are pivotally moved in the reverse direction. Plate springs 7 are fixed on free ends of the collets 3 so as to be positioned between the collets 3 and an inner surface of the side wall of the lower housing member 1. The collets 3 receive the pivotal forces directing toward the center of the lower housing member 1 owing to the plate springs 7. Inclined surfaces 3a are formed at the respective free end portions of the collets 3.

A slide cam 9 is provided in the central portion of the mount so as to slidingly move in the lateral direction by guiding a guide member 8a formed on an upper housing member 8. Inclined surfaces 9a are formed at the front end portion of the slide cam 9, and are engaged with the inclined surfaces 3a formed on the collets 3. The slide cam 9 further has a bearing 9b, and a cam-engaged shaft 11 passed through one end portion of an L-shaped lever 10 is fitted to the bearing 9b. A pivot 12 provided at an intermediate portion of the lever 10 is joined to the upper housing member 8. Accordingly, when the lever 10 is moved vertically, the slide cam 9 is laterally slided. The movement of the slide cam 9 is transmitted to the collets 3 engaged with the inclined surfaces 9a formed on the slide cam 9. Accordingly, the collets 3 are turned around the pivots 2 by an operation of the lever 10.

As shown in Figs. 1(a) and 1(b), when a tape reel is not set on the mount, the lever 10 is in an upper position, the slide cam 9 is in a right-hand position, and the collets 3 are in positions closer to the axis of the mount owing to the resilient force of the plate springs 7. In this case, the free ends of the rubber members 4 and plates 5 provided on the collets 3 are positioned at the inside of the broken line 6 representing an inner circumferential surface of a tape reel. Therefore, a tape reel can be inserted into this mount.

In order to fix a tape reel on this mount, the lever 10 is lowered as shown in Figs. 2(a) and 2(b). As a result, the slide cam 9 is moved left, and the inclined surfaces 9a are slided on the inclined surfaces 3a of the collets 3, so that the collets 3 are expanded. Since the collets 3 are expanded to the outside of the mount turning around the pivots 2, the free ends of the rubber members 4 and plates 5 project to the outside of the broken line 6. Accordingly, the tape reel inserted in the mount is pressed at its inner circumferential surface 6 by the rubber members 4, and a reel edge of the tape reel is held by the plates 5. The plates 5 are provided for the purpose of preventing the lever 10 from being lowered excessively only when a tape reel is inserted in an inclined state to a mount. That is, when a tape reel is not inserted properly to the mount, the plates 5 impinge upon an inner circumferential surface of the tape reel by lowering the lever 10, and the lever 10 cannot be lowered any more.

In order to remove a tape reel, which is fixedly set on a mount, the lever 10 is raised. Consequently, the slide cam 9 is moved to right, and the inclined surfaces 9a at its front end portion are slided on the inclined surfaces 3a of the collets 3. Since the expanded force of the slide cam 9 is released, the collets 3 are turned toward the axis of the mount owing to the resilient force of the plate springs 7. As a result, the inner circumferential surface of the tape reel is released from the pressure from the rubber members 4 to render the tape reel ready to be removed from the mount.

In the above-described conventional reel fixing mechanism, the rubber members 4 for pressing the inner circumferential surface of a tape reel are provided on the collets at the portions substantially corresponding to two diametrically opposite portions of the inner circumferential surface of the tape reel. Therefore, the rotational axis of the tape reel tends to be inclined with respect to the rotational axis of the mount around the mentioned diametrical line. Consequently, an edge portion of a tape comes into contact with a reel flange and damaged when it draws out from the tape reel. Furthermore, when a magnetic tape device has been set under uncomfortable conditions, the rubber members 4 on the collets 3 stick to an inner circumferential surface of the tape reel in some cases. In such a case, the collets 3 are not often returned to their release positions shown in Fig. 1 by the force of the plate springs 7 alone. This prevents the tape reel from being removed from the mount. Furthermore, when a tape reel is set on or removed from a mount, the frictional force occurs between the inclined surfaces 9a of the slide cam 9 and those 3a of the collets 3. Accordingly, these contact surfaces are worn early and the dust occurs in the mount. Consequently, a stable operation of the mount gradually becomes unable to be obtained.

The embodiments of the present invention will now be described.

Referring to Fig. 3, a tape reel 20 is fixedly set on a mount 30, and is rotated around its rotational axis by receiving the driving force from a driving motor. A lever 31 is provided on a front surface of the mount 30. The fixing and removing of a tape reel 20 are done by operating the lever 31.

Referring to Figs. 4, 5(a), 5(b), 6(a), 6(b) and 7, collets 34 rotatable around two eccentric pins 33 are provided on a lower housing member 32 of the mount 30. In each of the eccentric pins 33, the axis A of a tap 33a and the axis B of a shaft 33b around which the collet 34 is turned, have an eccentric relation as shown in Fig. 7. The rotational axis B of the collet 34 can be transferred by turning a screw portion 33c of the eccentric pin 33, which projects onto the outside of the lower housing member 32. Two rubber members 35 are disposed on the outer circumferential surface of the each collets 34, and are aligned with each other in the circumferential direction of the collets 34 and fixed thereto.

A lever 31 is pivotably joined to an upper housing member 36 with a pin 37, and a rod 38 is provided at one end of the lever 31. The rod 38 is engaged with a rod receiver 40 formed on a slide cam 39 and transmits the pivotal movement of the lever 31 to the slide cam 39. The sliding direction of the slide cam 39 is restricted by a groove 41 formed on a center portion of the lower housing member 32 and a guide member 42 integrally formed with the upper housing member 36. The slide cam 39 can be slide to right and left by guiding the groove 41 and the guide member 42. Namely, when the lever 7 is moved in the direction of a dual arrow C, the slide cam 39 is slided in the lateral direction. The lateral movement of the slide cam 39 is restricted by adjusting screws 44 and 45, which are provided on side walls 43 of the lower housing member 32 contacting an inner circumferential surface of a tape reel 20, and which extend to restricted positions of the movement of the slide cam 39.

The movement of the slide cam 39 is transmitted to the collets 34 via link mechanisms 49, each of which consists of a pin 46 provided at one end portion of the slide cam 39, a pin 47 provided at a free end portion of a collet 34, and an arm 48 holding the pins 46 and 47 at its both end portions. When the lever 31 is in a raised state as shown in Figs. 5(a) and 5(b), the slide cam 39 is moved to right, so that the collets 34 are turned toward the center of this mechanism. When the lever 31 is in a lowered state as shown in Figs. 6(a) and 6(b), the slide cam 39 is moved to left, so that the collets 34 are turned toward an outer circumferential wall of this mechanism. The rubber members 35 fixed to the collets 34 are so arranged that the rubber members 35 are removed from an inner circumferential surface 21 of the setting tape reel 20 when the collets 34 are in an inwardly turned state, and pressed against the mentioned surface 21 when the collets 34 are in an expanded state.

Plates 50 are disposed on intermediate portions of the flat side surfaces opposite to the upper housing member 36 of the collets 34. The plates 50 are provided for the purpose of preventing the collets 34 from being moved outward by operating the lever 31 in the case where the tape reel 20 is not properly set to the mount. When the collets 34 are drawn inward to the center of the mount 30, outer circumferential surfaces 50a of the plates 50 are positioned in the inside of the inner circumferential surface 21 of the tape reel 20. When the collets 34 are moved outward to the outer circumferential wall of the mount 30, the outer circumferential surfaces 50a project outward from the inner circumferential surface 21 of the tape reel 20. When the tape reel 20 is set properly to the mount 30, the collet 34 can be expanded in the outward direction to the outer circumferential wall of the mount 30. Accordingly, the inner circumferential portion of the tape reel 20 is sandwiched between the plates 50 and an edge portion 32a of the lower housing member 32. When the tape reel is not set properly, i.e. when the tape reel is set to the mount 30 having a gap distance between the circumferential side wall opposite to the mount 30 of the tape reel 20 and the edge portion 32a of the housing 32, the plates 50 impinge upon the protruding portion of the inner circumferential surface 21 of the tape reel 20 owing to the expansion of the collets 34. Therefore, the collets 34 cannot be expanded any more. This allows an operator, who moves the lever 31 operatively connected to the collets 34, to recognize that the tape reel 20 was not set on the mount 30 properly.

The operation of the tape reel fixing mechanism of the above-mentioned construction will now be described.

In the tape reel fixing mechanism, in which the tape reel 20 has not yet been inserted, the lever 31 is in a raised state as shown in Figs. 5(a) and 5(b), and the collets 34 are in an inwardly-drawn state. The side walls 43 of the lower housing 32, four rubber members 35, and the outer circumferential surfaces 50a of the plates 50 are positioned in the broken line 21 representing the inner circumferential surface of the tape reel 20. Accordingly, the tape reel 20 can be set on the mount 30.

The tape reel 20 set on the mount 30 is fixed thereto by lowering the lever 31. When the lever 31 is lowered, the slide cam 39 is moved slidingly to left until the slide cam 39 comes into contact with the adjusting screw 44. The leftward sliding movement of the slide cam 39 is transmitted to the collets 34 via the arms 48 of the link mechanisms 49. Consequently, the collets 34 are moved pivotally about the eccentric pins 33 and expanded toward the outer circumferential wall of the mount 30 as shown in Figs. 6(a) and 6(b). This causes the four rubber members 35, which are fixed to the collets 34, to press the inner circumferential surface 21 of the tape reel 20. Thus, the tape reel 20 is fixedly set on the mount 30.

In the reel fixing mechanism in the first embodiment of the present invention, the inner circumferential surface 21 of the tape reel 20 is pressed by the rubber members 35 provided on the four different portions of the collets 34 as mentioned above, to fix the tape reel 20 to the mount 30. Thus, the rotational axis of the tape reel 20 is prevented from becoming eccentric with respect to that of the mount 30. Therefore, the tape reel 20 can be rotated without inclining, and the tape edge is not damaged.

In order to release the settled tape reel 20 from the mount 30, i.e. when a operator removes the tape reel 20 from the mount 30, the lever 31 in a lowered state is raised. Consequently, the slide cam 39 is moved to right until it comes into contact with the adjusting screw 45. Since the slide cam 39 and collets 34 are connected together via the link mechanisms 49, the collets 34 are reliably turned about the eccentric pins 33. Therefore, when the slide cam 39 is moved slidingly to right, the collets 34 is reliably toward the axis of the mount 30. Accordingly, even when the rubber members 35 stick to the inner circumferential surface 21 of the tape reel 20, the rubber members 35 can be removed from the surface 21 reliably. When the collets 34 are turned toward the axis of the mount 30, the inner circumferential surface 21 of the tape reel 20 is released from the pressure from the rubber members 35. As a result, the reel fixing mechanism is again put in the condition shown in Figs. 5(a) and 5(b). Namely, the tape reel 20 on the amount 30 becomes ready to be removed therefrom.

The pressure force applied from the collets 34 and rubber members 35 to the tape reel 20 is regulated by turning screw portions 33c, which project onto the lower housing member 32, of the eccentric pins 33. When the screw portions 33c are turned, the axes of pivotal movements of the collets 34 are transferred. Accordingly, an amount of projection of each of the rubber members 35 can be varied in the state that the tape reel 20 is fixedly set on the mount 30, so that the pressure applied from the rubber members 35 to the tape reel 20 is also varied.

Referring to Fig. 8 showing a second embodiment of the present invention, guide pins 82, 83a, 83b for a slide cam 81 are provided on a lower housing member 80 of a mount for tape reels. In the central portion of the slide cam 81, a groove 84 extending in the sliding direction of the cam 81 is formed. When the slide cam 81 is set in the lower housing member 80, the groove 84 is engaged with the guide pin 82, and the side portions of the slide cam 81 are engaged with the guide pins 83a and 83b. Namely, the slide cam 81 is disposed between the guide pins 83a and 83b, and can be slide on the lower housing member 80 as the cam 81 is guided by these three pins 82, 83a and 83b.

Plates 85 provided on each of the collets 34 have a length so long as to enclose substantially a half of an outer circumferential surface of the collets 34. Since this plate 85 has an outer circumferential side surface 85a longer than that of the plate 50 in the first embodiment, a tape reel unproperly set on a mount 30 can be detected more accurately. When a tape reel is fixedly set on a mount, an inner circumferential portion of the tape reel 20 is sandwiched between the outer circumferential side surfaces 85a of the plates 85 and an edge portion 80a of the lower housing member 80 at a comparatively large length. This enables the inclining of the tape reel 20 to be reduced to a greater extent.

The headless screws 87 are inserted into an upper housing 86 from a side surface thereof for the purpose of holding a pin 37, which constitutes a pivot of a lever 31, from both sides thereof. Owing to these screws 87, the pin 37 is not loose from the upper housing member 86.

Referring to Fig. 9 showing a third embodiment of the present invention, rubber members 91 are provided on collets 90. Each of the rubber members 91 has a length so long as to enclose substantially the whole of an outer circumferential surface of collets 90. When a tape reel is fixedly set on a mount, the inner circumferential surface of the tape reel is pressed by the whole of the outer circumferential surfaces 91a of the rubber members 91. Accordingly, the occurrence of inclination of the rotational axis of the tape reel 20 to the rotational axis of the mount can be reduced more reliably.

As described above each of collets for pressing and fixing a tape reel has elastic members positioned on different diameters of a reel fixing mechanism, and means for connecting collets and a slide cam together consist of link mechanisms. Owing to these characteristics, the rotational axis of a tape reel fixedly set on a mount does not become eccentric with respect to that of the mount, and operation of the mount becomes reliable and smooth.

**Claims**

1. A tape reel fixing mechanism (30) comprising:

a circular housing (32) including a base plate (32a) and a circumferential side wall (43), and supplied with rotary force by a tape reel driving means;

pins (33) planted in the vicinity of an outer circumferential portion of said base plate, and extending parallel to said side wall (43);

a plurality of collets (34) pivotably mounted at their respective one end portion on said pins (33), said collets (34) having arcuate outer circumferential surfaces with a curvature similar to that of said circular housing (32), and elastic members (35) provided on said outer circumferential surfaces;

a guide member (41)(82) provided in the central portion of said base plate;

a slide cam (39)(81) engaging the free end of said collets (34) and guided by said guide member (41)(82, 83a, 83b); and

a lever (31) engaging said slide cam (39)(81) for enabling said slide cam to slide on said guide member (41)(82), said collets (34) turning in the first direction toward said circumferential side wall (43) or in the second direction toward the axis of said circular housing (32) for pressing said elastic members (35) against a tape reel (20) or releasing said tape reel (20) responsive to an operation of said lever (31),

characterized in that said tape reel fixing mechanism (30) further comprises link means (49) for connecting said free end of said collets (34) and said slide cam (39)(81) together, whereby said collets (34) are compulsively moved in the first and the second direction by said operation of said lever (31) via said link means (49).

2. The tape reel fixing mechanism as claimed in Claim 1, characterized in that each of said pins (33) has a first rotational axis (B) around which said collet (34) rotates and a second rotational axis (A) which is eccentric but substantially parallel to said first rotational axis (A), each of said pins (33) being planted rotatably around said second rotational axis (A) on said base plate.

3. The tape reel fixing mechanism as claimed in Claim 1, characterized in that each of said collets (34) has at least two of said elastic members (35) at different positions a predetermined distance apart.

4. The tape reel fixing mechanism as claimed in Claim 1, characterized in that said collets (34) further include plates (50) for detecting a tape reel unproperly set on said mechanism.

5. The tape reel fixing mechanism as claimed in Claim 1, characterized in that said guide member consists of a groove (41) formed in said base plate of said housing.

6. The tape reel fixing mechanism as claimed in Claim 1, characterized in that said slide cam (81) includes a groove (84) in the central portion thereof, said guide member consisting of guide pins (82) (83a) (83b) planted on said base plate of said housing, said slide cam (81) being guided in said housing by engaging said groove (84) with one (82) of said guide pins.

7. The tape reel fixing mechanism as claimed in Claim 1, characterized in that said housing (32) is provided with members (44)(45) for restricting the range of movement of said slide cam (39).

**Patentansprüche**

1. Vorrichtung (30) zum Befestigen von Bandspulen mit

einem runden Gehäuse (32) mit einer Grundplatte (32a) und einer umlaufenden Seitenwand (43), dem durch eine Bandspulenantriebseinrichtung eine Drehkraft zugeführt wird;

Stiften (33), die in der Nähe eines äußeren Umfangsabschnitts der Grundplatte angeordnet sind und parallel zur Seitenwand (43) verlaufen;

mehreren Spannbacken (34), die an jeweils einem Endabschnitt drehbar auf den Stiften (33) gelagert sind und die gewölbte äußere Umfangsflächen mit einer Krümmung, die etwa der des runden Gehäuses (32) entspricht, und elastische Glieder (35) auf der äußeren Umfangsfläche aufweisen;

einer im zentralen Abschnitt der Grundplatte angeordneten Führungseinrichtung (41) (82);

einer Gleitnockenscheibe (39)(81), die am freien Ende der Spannbacken (34) angreift und von der Führungseinrichtung (41) (82) (83a) (83b) geführt wird; und

einem Hebel (31), der an der Gleitnockenscheibe (39) (81) angreift und das Gleiten der Gleitnockenscheibe auf der Führungseinrichtung (41)(82) ermöglicht, wobei sich die Spannbacken (34) in der ersten Richtung auf die umlaufenden Seitenwände (43) hinbewegen oder in der zweiten Richtung auf die Achse des runden Gehäuses (32) hinbewegen, um in Abhängigkeit von einer Betätigung des Hebels (31) die elastischen Glieder (35) gegen eine Bandspule (20) zu drücken oder die Bandspule (20) zu lösen,

dadurch gekennzeichnet, daß die Vorrichtung (30) zum Befestigen der Bandspule ferner Verbindungsglieder (49) zum Verbinden des freien Endes der Spannbacken (34) mit der Gleitnockenscheibe (39)(41) aufweist, wobei die Spannbacken (34) durch Betätigen des Hebels (31) über die Verbindungsglieder (49) zwangsweise in die erste und die zweite Richtung bewegt werden.

2. Vorrichtung zum Befestigen von Bandspulen nach Anspruch 1, dadurch gekennzeichnet, daß jeder Stift (33) eine erste Drehachse (B) aufweist, um die sich die Spannbacke (34) dreht, und eine zweite Drehachse (A), die exzentrisch, aber im wesentlichen parallel zur ersten Drehachse (B) verläuft, wobei jeder Stift (33) drehbar um die zweite Drehachse (A) auf der Grundplatte angeordnet ist.

3. Vorrichtung zum Befestigen von Bandspulen nach Anspruch 1, dadurch gekennzeichnet, daß jede Spannbacke (34) mindestens zwei elastische Glieder (35) an verschiedenen Positionen in einer bestimmten Entfernung voneinander aufweist.

4. Vorrichtung zum Befestigen von Bandspulen nach Anspruch 1, dadurch gekennzeichnet, daß die Spannbacken (34) ferner Platten (50) zum Ermitteln eines falschen Sitzes einer Bandspule auf der Vorrichtung aufweisen.

5. Vorrichtung zum Befestigen von Bandspulen nach Anspruch 1, dadurch gekennzeichnet, daß die Führungseinrichtung aus einer Nut (41) in der Grundplatte des Gehäuses besteht.

6. Vorrichtung zum Befestigen von Bandspulen nach Anspruch 1, dadurch gekennzeichnet, daß die Gleitnockenscheibe (81) in ihrem mittleren Abschnitt eine Nut (84) aufweist, wobei die Führungseinrichtung aus Führungsstiften (82) (83a) (83b) besteht, die auf der Grundplatte des Gehäuses angeordnet sind, und die Gleitnockenscheibe (81) im Gehäuse dadurch geführt wird, daß ein Führungsstift (82) in die Nut eingreift.

7. Vorrichtung zum Befestigen von Bandspulen nach Anspruch 1, dadurch gekennzeichnet, daß das Gehäuse (32) Glieder (44)(45) zum Begrenzen des Bewegungsbereichs der Gleitnockenscheibe (39) aufweist.

**Revendications**

1. Mécanisme (30) de fixation de bobine de bande, comprenant:
— un logement circulaire (32) comportant une plaque de base (32a) et une paroi latérale circonférentielle (43), et soumis à une force de rotation par un moyen d'entraînement de bobine de bande;
— des goujons (33) montés dans le voisinage d'une partie circonférentielle extérieure de la plaque de base, et s'étendant parallèlement à la paroi latérale (43);
— une multitude de griffes (34) montées en pivotement à leur partie extrême respective sur les axes (33), les griffes (34) ayant une surface circonférentielle extérieure en forme d'arc avec une courbure semblable à celle du logement circulaire (32), et des organes élastiques (35) montés sur la surface circonférentielle extérieure;

— un élément de guidage (41) (82) monté dans la partie centrale de la plaque de base;

— une came coulissante (39) (81) en contact avec l'extrémité libre des griffes (34) et guidée par l'élément de guidage (41), (82, 83a, 83b); et

— un levier (31) venant en contact avec la came coulissante (39) (81) pour permettre à cette came de coulisser sur l'élément de guidage (41) (42), les griffes (34) tournant dans la première direction vers la paroi latérale circonférentielle (43) ou dans la seconde direction vers l'axe du logement circulaire (32) pour comprimer les organes élastiques (35) contre une bobine de bande (20) ou libérer la bobine de bande (20) en réponse au fonctionnement du levier (31);

caractérisé en ce que le mécanisme (30) de fixation de bobine de ruban comporte en outre un moyen de tringlerie (49) pour relier l'extrémité libre des griffes (34) et la came coulissante (39) (81), d'où il résulte que les griffes (34) sont déplacées de force dans la première et la seconde direction par le fonctionnement du levier (31) via le moyen de tringlerie (49).

2. Mécanisme de fixation de bobine de bande selon la revendication 1, caractérisé en ce que chacun des goujons (33) présente un premier axe de rotation (B) autour duquel la griffe (34) tourne et un second axe de rotation (A) qui est excentrique mais sensiblement parallèle au premier axe de rotation (A), chacun des goujons (33) étant monté de manière à pouvoir tourner autour du second axe de rotation (A) sur la plaque de base.

3. Mécanisme de fixation de bobine de bande selon la revendication 1, caractérisé en ce que chacune des griffes (34) a au moins deux des organes élastiques (35) à des positions différentes en étant espacés d'une distance prédéterminée.

4. Mécanisme de fixation de bobine de bande selon la revendication 1, caractérisé en ce que les griffes (34) comprennent en outre des plaques (50) pour détecter une bobine de bande installée de façon incorrecte sur le mécanisme.

5. Mécanisme de fixation de bobine de bande selon la revendication 1, caractérisé en ce que l'élément de guidage comporte une rainure (41) ménagée dans la plaque de base du logement (1).

6. Mécanisme de fixation de bobine de bande selon la revendication 1, caractérisé en ce que la came coulissante (81) comporte une rainure (84) dans sa partie centrale, cet élément de guidage étant constitué de goujons de guidage (82) (83a) (83b) montés sur le plaque de base du logement, la came coulissante (81) étant guidée dans le logement par engagement de l'un (82) des goujons de guidage dans la rainure (84).

7. Mécanisme de fixation de bobine de bande selon la revendication 1, caractérisé en ce que le logement (32) comporte des organes (44) (45) permettant de limiter la plaque de déplacement de la came coulissante (39).

**Fig.1(a)**
PRIOR ART

**Fig.1(b)**
PRIOR ART

1

0 101 328

Fig.2(a)

PRIOR ART

Fig.2(b)

PRIOR ART

*Fig.3.*

20

30

31

*Fig.7.*

B

33a

33

A

33b

33c

*Fig.9.*

91a

91

90

30

Fig.4.

4

Fig. 5(a)

Fig. 5(b)

Fig. 6(a)

Fig. 6(b)

Fig.8.